Europäisches Patentamt

European Patent Office

Office européen des brevets

(11) Publication number: **0 234 945**
**A2**

# (12) EUROPEAN PATENT APPLICATION

(21) Application number: **87301732.1**

(22) Date of filing: **27.02.87**

(51) Int. Cl.³: **A 61 C 19/10**
**A 61 K 6/06**

(30) Priority: **28.02.86 US 834588**

(43) Date of publication of application:
**02.09.87 Bulletin 87/36**

(84) Designated Contracting States:
**AT BE CH DE ES FR GB GR IT LI LU NL SE**

(71) Applicant: **FORSYTH DENTAL INFIRMARY FOR CHILDREN**
**140 Fenway**
**Boston Massachusetts 02115(US)**

(72) Inventor: **Riley, Edwin J.**
**47 Harland Street**
**Milton Massachusetts 02186(US)**

(72) Inventor: **Amdur, Benjamin H.**
**89 rock Meadow Road**
**Westwood Massachusetts 02090(US)**

(72) Inventor: **Sozio, Ralph B.**
**426 Commonwealth Avenue**
**Boston Massachusetts 02215(US)**

(74) Representative: **Hughes, Brian Patrick et al,**
**Graham Watt & Co. Riverhead**
**Sevenoaks, Kent TN13 2BN(GB)**

(54) Dental colour shade kit and method of dental shade selection.

(57) A dental colour shade selection kit and method for the preparation of the correct colour shade of dental prostheses, which method comprises: forming in a recessed tab device (10) a hardened opaque layer; forming a visualizing veneer dental composition layer on top of the opaque layer to permit visualization of the correct colour shade; and matching the veneer dental composition to a natural tooth and to a dental restoration.

FIG. I

- 1 -

## DENTAL COLOUR SHADE KIT AND
## METHOD OF DENTAL SHADE SELECTION

### BACKGROUND OF THE INVENTION

This invention relates to dental colour shade selection.

Colour selection for dental porcelain crowns is difficult and demanding for both dentists and laboratory technicians. Even if the dentist is knowledgeable in the science and art of colour, he is faced with the problem of using dental shade guides provided by the manufacturers which do not cover the entire range encountered in natural teeth. Available shade guides are comprised of denture teeth which are made of multi-blended high fusing porcelain or acrylic masses that are five to eight times thicker than the actual restoration made to match the patient's tooth. This makes it very difficult, first for the dentist to determine and communicate the desired shade, and second for the technician to meet the dentist's prescription. In addition, the optical properties of all the commercial porcelains are different and the same shade formulated by different manufacturers does not yield the same result. The appearance of anterior porcelain crowns is identified by most large dental laboratories as the leading cause of rejection by dentists.

Therefore, a dental shade determination kit and method of shade selection which eliminates many of the problems of dental- or porcelain-type shade selection by the dentist or other and communication to the technician and actual fabrication in the laboratory is desirable.

REFERENCE TO PRIOR APPLICATION

This application is a development of our prior European Application No. 86303494.8 filed 8th May 1986 (Publication No. 0201334). This application discloses a heat sinterable porcelain powder mix and a method of preparing a sintered porcelain product of desired colour, particularly for use in the fabrication of dental appliances, such as dental porcelain crowns. The mix comprises an admixture of a porcelain powder with a liquid binder, which liquid binder has an index of refraction the same or substantially the same as the index of refraction of the porcelain powder, thereby permitting visualization of the true post-sintered colour of the porcelain powder mix during application and prior to heat sintering.

The liquid binder employed comprises a volatile liquid binder generally having an index of refraction of from about 1.49 to 1.56, e.g. 1.49 to 1.51. The liquid binder may comprise for example a solution of an aryl substituted alcohol and an alicyclic alcohol, such as a solution of benzyl-tertiary-butanol and cycloheptanol.

The premixed gel-like powder mix composition comprises a porcelain powder and the liquid binder, with the liquid binder about 10 to 50 percent by weight of the composition. The benzyl-containing alcohol may vary in amount and may comprise from about 80 to 99 percent by volume of the binder.

The method comprises preparing the powder mix composition, visually observing and comparing the mix composition to a desired colour standard prior to heat sintering, and if required adjusting the shading to match the desired standard, and heat sintering the composition to produce a product of the preselected shade or colour.

SUMMARY OF THE INVENTION

The present invention relates to a porcelain shade kit and a method of porcelain shade selection. In particular, the invention concerns a dental shade determination kit for dental appliances, such as crowns, and a method of dental shade selection.

The invention comprises a method for the selection and determination of shade for porcelain objects, particularly for dental crowns, both the body and incisal portion, and which method comprises forming a thin, opaque layer of a hardened porcelain mix, typically on a transparent base, which hardened layer is selected to simulate the fired opaque layer applied when actually fabricating the actual crown. The thin, hardened, opaque layer may be formed by preparing a mixture of an opaque dental or ceramic powder with a hardening agent, and preferably a sodium silicate solution, then applying the composition which has a creamy consistency as a thin layer, typically less than 4/10mm, onto a transparent base, such as onto a surface of a clear, shovel-shaped tab element formed of a transparent or translucent plastic. Generally the hardenable mix is applied to the recessed surface of the tab element with a brush or a spatula and is formulated to harden in generally less than 10 minutes, such as 3 minutes or less. This hardened opaque layer simulates the fired opaque layer applied by the dental technician when fabricating the actual crown.

A layer of a body veneer porcelain is then applied over the hardened opaque layer, typically added to and forming a thicker layer in the pocket of the tab, generally of approximately 1mm in layer thickness. The body veneer porcelain layer typically comprises an admixture of a porcelain, such as a dental powder,

- 5 -

together with a liquid binder, which liquid binder has been selected to provide the proper index of refraction and dispersivity which allows immediate visualization of the true or post fired colour of the composition. Generally the layer of the body veneer porcelain comprises a gel-like admixture of the dental porcelain with an organic liquid binder. The proportions of the materials in the organic liquid binder solution are selected to match the index of refraction of the admixed body veneer porcelain, all as set forth and described in the prior co-pending application.

The veneer body porcelain organic liquid binder mixture is added to the pocket in the tab. Generally the tab includes a rim which dictates the predetermined thickness of the body porcelain to be added, and ideally the thickness added should correspond to the anticipated thickness allowed by the tooth reduction, which is normally 1mm, but may vary as desired. The transparent tab then containing the lower or hardened opaque powder-inorganic liquid mixture together with the visualizing body porcelain organic mixture is then held next to the tooth, or other object to be matched in colour and shade, and the shade and colour matched by direct comparison. If required, shade and colour match is achieved by use of additional porcelain modifiers and stains, until the right shade and colour is attained. If desired, once the body shade is matched, selection of the incisal part of the tooth may be carried out in the same manner.

The method thus provides for a shade determination system using a veneer porcelain powder mixed with a visualizing organic binder which is placed over a surface in a predetermined thickness, which surface demonstrates the same colour as the fired opaque. The method is particularly useful with a clear or transparent type glass or plastic tab-like element designed to provide a thickness approximating the thickness of the actual restorations to be undertaken. In the method an opaque porcelain powder is admixed with an inorganic binder, that is, for example, a silicate, like a sodium silicate solution, which acts as a hardening agent. This is used to provide an opaque layer which simulates the fired opaque layer over which the veneer porcelain would be employed. The inorganic opaque binder comprises typically a hardening agent, such as a sodium silicate solution, which when mixed with a dental opaque porcelain sets hard within a reasonable period of time and allows visualization of the colour of the fired opaque.

The present invention provides for a shade selection kit which includes as components a liquid binder, such as an organic liquid binder described in the prior pending European patent application, which organic binder is selected to allow the visualization of the post-sintered veneer porcelain shade and the unfired porcelain masses, that is, prior to heat sintering. The kit may include the organic binder or the binder alone or a premixed gel-like porcelain mixture of the binder with dental porcelain. Where the liquid binder is provided alone, the dentist or technician would admix the available porcelains with the liquid binder to form the visualizing layer. The shade selection kit would also include an inorganic liquid binder, such as a sodium silicate, which sets with dental porcelain powders and allows formation of the opaque layer. The inorganic liquid binder may be supplied alone and then the opaque porcelain powder mixed by the dentist, or be provided as a premixture of separate liquid binder and dental powder, or premixture and hardening just prior to use.

Another component of the shade selection kit comprises a clear, tab-like element designed to support the opaque porcelain hardened layer and to provide for the thicker veneer porcelain layer application over the opaque layer to permit easy shade matching after application of the veneer porcelain layer.

Typically the tab-like element comprises a transparent or translucent material, such as glass or any clear mouldable or machinable polymeric material not attacked by the organic binder, such as for example a cellulose acetate tab. Generally the tab is formed to the approximate shape, length and width of the crown of a central incisor (approximately 10mm in length x 8mm in width). The tab is also fabricated to provide a predetermined recess, such as a 1.2mm recess on the front surface, and generally with a thin rim on all or on all but the incisal edge. The tab element should be transparent, or at the very least translucent, to minimize its effect on shade determination during the selection process. Optionally, the back of the tab has a button to allow a handle to be secured thereto to permit the dentist to rotate the tab containing the opaque layer and the visualizing layer while being held next to the tooth during the comparison.

The shade selection tab employed for use in the shade and colour selection of a crown should have a shovel-type recess to simulate the crown or other dental prosthesis to be constructed, and typically has a depth of about 1.2mm, but of course the shape of the recess and the depth may vary depending on the dental or other article to be made and shade matched.

The tab should be constructed of a material which is not affected by the organic liquid binder used in the visualizing binder and generally is composed of glass or press moulded or machined from a polymeric material, such as an acrylic resin like Plexiglass, Nylon, cellulose acetate, polycarbonate and other polymers. Preferably the tab is of a transparent material; however, the tab need not be wholly transparent or translucent. It has been found important that at least the edge or rim of the tab should be transparent. The rim height provides for the easy application of the right thickness of the visualizing binder mix composition to the recess, i.e. the dentist can easily level off the mix to the right level of thickness. The edge or rim should be transparent so that it has no detrimental colour effect on the shade/colour selection process of the crown.

The opaque powder used to form the simulated fired opaque layer is a standard item of commerce and typically comprises porcelain powder usually with one or more metal-oxides to cover the metal of the base of the dental prosthesis. Unlike the visualizing veneer dental composition used to colour shade match, which can be prepared before use as a gel, the opaque composition is admixed with a hardening agent usually before use, or tabs with prepared hardened opaque layers can be used. The chemically hardened opaque layer simulates the fired opaque layer. The hardening agent should not be affected by the organic liquid binder and should on admixing harden the opaque layer. Inorganic hardening agents, such as silicates, typically silicate solutions of alkali metals like sodium silicates, have been found useful for use as hardening agents.

In use of the shade kit components, the same opaque that is anticipated to be used to mask the metal in the metal ceramic restoration is then applied to the recesed surface of the clear tab. Typically, the opaque is a mixture of porcelain powder and metal-oxide. The actual opaques used by the technician are mixed with an inorganic binder to a creamy consistency and painted on the tab. The resulting opaque layer (approximately 0.2mm thick) should demonstrate the same colour as fired opaque porcelain and set hard so that it will not mix with subsequently applied veneer porcelains. One liquid hardening agent useful for the opaque application is a silicate solution, e.g. sodium silicate. The sodium silicate opaque mixture sets hard and is unaffected by the organic liquid binder used with the veneer porcelains. The opaque silicate mixture provides the same background as will be developed by the technician fabricating the crown.

Veneer body porcelain premixed with an organic binder (as disclosed in our aforementioned European application), is then added to the recess of the opaqued tab. The rim on the tab dictates the thickness of body porcelain. Ideally the thickness should be the same as recommended by manufacturers in the construction of a crown (approximately 1mm). The tab with body porcelain is then held next to the tooth to check shade match. Exact body porcelain match is achieved by trial of basic available body porcelains and, if necessary, by addition of available porcelain modifiers or stains also mixed with the organic liquid. Incisal shade is then selected from the premixed incisal porcelains and is added to the tab and the desired distribution of body and incisal porcelain determined. Depending on the desired detail, special effects such as craze lines, clear areas or hypocalcified areas may be added at this time.

With this approach, precise matching of a natural tooth shade with the actual materials and at the same thickness of the anticipated restoration is possible. Once the shade determination is completed it then becomes the prescription for the laboratory technician. If the tab dries out before use by the technician it can simply be rewet with the same liquid binder used to premix the veneer porcelains.

A shade determination such as described above takes much of the guess work out of shade selection. Communication problems, such as amount of incisal overlay or special effects, are virtually eliminated. With this invention the existing shade guides can now be what they are designed for, namely guides. The actual shade determination is made with the same porcelain as that used by the technician to fabricate the actual crown.

BRIEF DESCRIPTION OF THE DRAWING

An embodiment of the present invention will now be described, by way of example, with reference to the accompanying drawing, in which:-

Fig. 1 is a perspective view from above of a tab device employed in the dental shade selection kit and method;

Fig. 2 is an enlarged illustrative sectional view of the tab device of Fig. 1 with a hardened opaque body layer and a top visualization layer; and

Fig. 3 is a perspective view from above of another tab device.

DESCRIPTION OF THE EMBODIMENTS

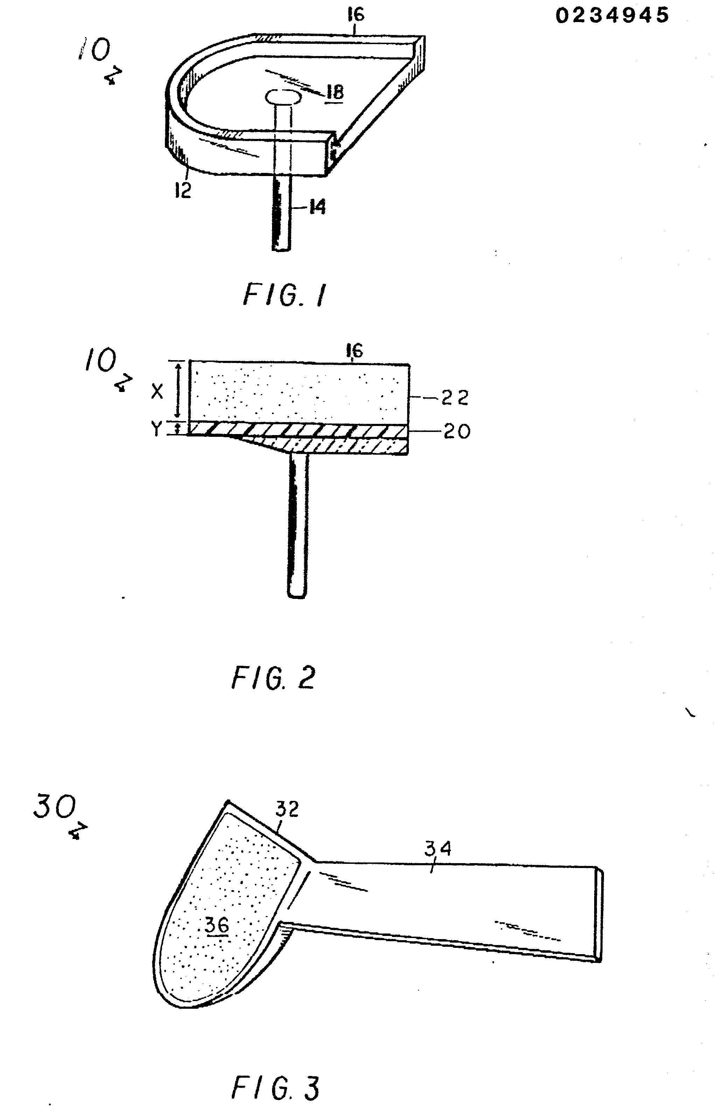

The drawing, Fig. 1, shows a tab device 10 to restore a tooth crown, the tab device having a body 12 moulded of a transparent/lucent plastic material and having a shovel-shape, i.e. crown shape, recess 18 defined by a peripheral edge 16, the recess having a depth of about 1.2mm. The tab 10 has a handle 14 secured to the bottom to enable the dentist to hold the tab 10 and place it in position for a direct colour-shade match with the tooth crown to be restored.

Fig. 2 shows the tab 10 having a 0.2mm inorganically hardened opaque layer 20 (y) overlayered by a 1.0mm visualizing veneer dental composition with the liquid binder 22 (x), e.g. having an index of refraction of 1.45 to 1.56.

Fig. 3 shows a tab device 30 pressed out of a thin sheet of transparent cellulose acetate material to form a body 32 with a side flat handle 34. The body has a cavity of a crown shape and as illustrated contains therein an opaque layer and a veneer composition 36 for shade matching by the dentist against the tooth to be restored.

Example 1

Determination of colour match for a dental porcelain to metal crown using Ceramco II Porcelain Powders (Johnson and Johnson Dental Products Company, East Windsor, New Jersey).

A clear shovel-shaped tab with a 1.2mm recess on the front surface machined from a piece of clear acrylic plastic, such as Plexiglass, is utilized. First, a Ceramco Paint-O-Paque Powder (dental porcelain powder) corresponding to the commercial shade tab which most closely approximates the tooth shade is mixed to a creamy consistency with a sodium silicate solution (wt. ratio ($SiO_2/Na_2O$) = 3.25; 42.7° Be) (1 gram porcelain powder to 0.4cc of sodium silicate solution). The mix is applied to the recessed surface of the tab with a brush or spatula. The mixture hardens in approximately three minutes and is approximately 0.2mm thick. When hardened this 0.2mm layer simulates the fired opaque layer applied by the dental technician when fabricating the actual crown. Alternatively the opaque application to the clear shade holder or tab can be completed ahead of time and labelled ready for use.

After the opaque is applied, the recess remaining in the tab will allow the application of approximately 1mm of body veneer porcelain. The available Ceramco Body Porcelains are then mixed with an organic liquid binder which provides the proper index of refraction and dispersivity to allow immediate visualization of the true post fired colour. One gram of Ceramco Porcelain Powder is mixed with approximately 0.35cc of the matched ogranic binder. For Ceramco Porcelain, the liquid binder refractive index should be 1.470 ± .001. A mixture of benzyl-tert.-butanol (56.7% vol.), cycloheptanol (2.8% vol.) and succinic acid diethyl ester (40.5% vol.) provides the necessary 1.470 ± .001 index and optimal handling characteristics. The body porcelain powders can be premixed with the described organic binder in jars ready for use.

An initial selection of the available body porcelain-organic mix is then added to the opaqued tab. The rim on the tab dictates the thickness of the body porcelain. Ideally the thickness should correspond to the anticipated thickness allowed by the tooth reduction (normally 1mm). The tab with the body porcelain organic mix is then held next to the tooth to be matched and the shade match checked by direct comparison. Exact body porcelain match is achieved by trial of basic available body porcelains and, if necessary, by addition of Ceramco Porcelain Body Modifiers and/or porcelain stains again mixed with the same matched organic binder.

Once the body shade is matched, the incisal (part of tooth toward the edge) shade is selected from the available Ceramco Incisal Porcelains. The incisal porcelains are mixed using the same ratio of powder and matched organic liquid binder as the body porcelains and optionally are premixed at these ratios in jars ready for use. The selected incisal porcelain-organic mix is then added to the tab to simulate the relative amount and distribution of the incisal shades of the tooth to be matched.

Once the basic body and incisal shades and relative distribution are determined, any special effects which may be present in the tooth to be matched, such as craze lines or areas of hypocalcification, may be added to the tab with porcelain stains mixed with the organic binder.

The completed tab determined by direct comparison by the dentist now becomes the prescription to the laboratory technician for the shade of the actual crown. If the tab dries out before use by the technician, it can be rewet with the same organic liquid matched to Ceramco Porcelain by simply placing two drops of liquid on the surface of the dry porcelain and waiting approximately five minutes to allow complete rewetting.

Using the shade determination described above with Ceramco Porcelain eliminates much of the guess work in shade selection and eliminates communication problems between dentist and technician. By using the matched organic liquid binder-veneer porcelain mixtures over the hardened opaque layer in the tab, the shade determination is made with the same materials at the same relative thickness as used by the technician in the fabrication of the acutal restoration.

Example 2

Determination of colour match for a dental porcelain to metal crown using Williams Porcelain Powders (Williams Gold Refining Company, Buffalo, New York 14214).

The same procedure is followed as in Example 1, except the organic liquid binder mixed with the Williams Porcelain Veneer Powders (body, incisal, modifiers) must match the index of refraction of the base glass used by the Williams Company. The Williams Veneer Powder must be mixed with an organic liquid binder which has a refraction index of $1.506 \pm .001$. A mixture of benzyl-tert.-butanol (85.7% vol.), cycloheptanol (4.3% vol.), succinic acid diethyl ester (3.8% vol.) and benzyl ether (6.2% vol.) provides the necessary index and optimal handling characteristics.

Example 3

Determination of colour match for a dental restoration using Vita VMK-68 Porcelain Powders (Vident, Baldwin Park, California 91706).

The same procedure is followed as in Example 1, except the organic liquid binder must allow the visualization of the post fired colours of the Vita Porcelain. The Vita Veneer Powders are mixed with an organic liquid binder which has a refraction index of 1.460 ± .001. A mixture of benzyl-tert.-butanol (45.4% vol.), cycloheptanol (2.2% vol.) and succinic acid diethyl ester (52.4% vol.) provides the necessary index and handling characteristics.

The above are examples of the described invention using three of the major available dental porcelains. Any porcelain could be utilized as long as the organic liquid binder has the necessary index to allow visualization of the true post fired shade of the veneer porcelains and the organic liquid-porcelain powder mix is applied over a background simulating the opaque colour provided by the manufacturer's opaque porcelain powder.

CLAIMS:

1.      A dental colour-shade selection kit for the selection of a colour-shade for a dental prosthesis, which kit comprises in combination a tab means to provide a recess of the shape of the dental prosthesis to be colour-shade matched and characterized by a transparent peripheral edge which defines a recess of defined depth, an opaque masking composition which comprises a dental procelain opaque powder which closely approximates the shade of the opaque layer of the dental prosthesis to be matched and an inorganic hardening agent for admixture with the said powder to form a hardened opaque layer in the recess of the tab means, and a visualizing veneer dental composition which comprises a porcelain powder mix and a liquid binder, which liquid binder is admixed with the said powder mix or a gel-like composition of the said powder and liquid binder, the liquid binder having an index of refraction the same or substantially the same as the dental porcelain to be colour-shade matched, the visualizing dental composition employed to form a layer in the recess over the opaque layer so as to enable the user to visualize and determine the proper dental comparison and the proper colour-shade prior to sintering.

2.      A kit as claimed in claim 1, characterized in that the tab means comprises a transparent body characterized by a shovel-like recess to approximate the shape of a dental crown.

3. A kit as claimed in claim 1 or claim 2, characterized in that the inorganic hardening agent of the opaque composition comprises a sodium silicate solution.

4. A kit as claimed in any preceding claim, characterized in that the liquid binder comprises an organic liquid binder composition which includes a solution of two or more organic liquids.

5. A kit as claimed in any preceding claim, characterized in that the liquid binder has an index of refraction of about 1.45 to 1.56.

6. A kit as claimed in any preceding claim, characterized in that the liquid binder comprises a mixture of liquids to an organic liquid composition, the liquids being selected from the following: benzyl-tert.-butanol, cycloheptanol, succinic acid diethyl ester, and benzyl ether.

7. A kit as claimed in any preceding claim, characterized in that the tab means comprises a transparent glass or polymeric body material defining a shovel-like recess to approximate a tooth crown with a transparent rim edge of a defined depth of about 1.2mm about the recess, with the tab means secured to an extending handle means for handling of the tab means in the colour-shade matching use.

8. A method for the colour-shade selection of a dental prosthesis, which method comprises providing a tab device having a recess with a shape approximating that of the dental prosthesis and a thickness depth approximating the dental prosthesis to be restored, the recess having a transparent peripheral edge rim, forming a thin hardened layer of an opaque masking composition in the recess, which opaque layer closely approximates the base opaque colour-shade of the dental prosthesis to be restored, forming a layer of a visualizing veneer dental composition over the opaque layer in the recess to the desired rim edge thickness depth, the dental composition comprising an admixture of a veneer dental porcelain powder and a liquid binder, the liquid binder having the same or substantially the same index of refraction as the veneer composition, and matching the colour-shade of the veneer layer in the tab device by visual comparison to the tooth or dental prosthesis to be matched, and optionally, as required, making adjustments to the colour-shade of the veneer dental composition to arrive at a matched dental prosthesis composition.

9.    A method as claimed in claim 8, characterized in that the tab device comprises a transparent shovel-shaped tab device having a recess approximating a tooth crown with a thickness depth of about 1.2mm.

10.    A method as claimed in claim 8, characterized in that the opaque composition comprises a thin layer by mixing an opaque porcelain powder with an inorganic hardening agent and coating the admixed composition on the surface of the recess.

11.    A method as claimed in claim 10, characterized in that the hardening agent comprises a sodium silicate solution.

12.    A method as claimed in claim 8, characterized in that the veneer dental composition comprises an organic liquid binder solution having an index of refraction of about 1.45 to 1.56.

13.    A method as claimed in claim 8, characterized in tht the liquid binder of the veneer dental composition comprises an admixture of volatile organic liquids selected from the group consisting of: benzyl-tert.-butanol, cycloheptanol, succinic acid diethyl ether, ester, and benzyl ether.

14.    A method as claimed in claim 8, characterized by providing a tab device comprising a transparent body material not affected by the liquid binder of the veneer dental composition and having a handling means to permit the tab device to be held for direct colour-shade comparison to the dental prosthesis to be restored.

15. A method as claimed in claim 8, characterized by preparing the dental prosthesis to the composition as determined by the colour-shade matching step.

16. A tab device containing the thin hardened layer of opaque composition and the layer of veneer dental composition produced by the method of any of claims 8 to 15.

17. A tab device for use in preparing colour-shade matched dental prosthesis, which tab device comprises a body composed of a transparent material which is not substantially affected by an organic liquid binder employed with the tab device, the body having a transparent peripheral edge lip defines a recess of defined depth and shape of the dental prosthesis to be restored, and a handling means secured to the body to permit direct colour-shade matching of the tab device containing the veneer porcelain composition with the dental prosthesis to be restored.

18. A tab device as claimed in claim 17, characterized in that the tab device is composed of glass or a transparent polymeric material.

1/1

0234945

FIG. 1

FIG. 2

FIG. 3